# EUROPEAN PATENT SPECIFICATION

(11) **EP 0 729 477 B1**
(45) Date of publication and mention of the grant of the patent: **27.10.1999**
(21) Application number: 94927384.1
(22) Date of filing: 09.09.1994
(51) Int. Cl.: C08F 4/02, C08F 4/605, C08F 10/00

(54) **POLYMERIZATION CATALYST SYSTEMS, THEIR PRODUCTION AND USE**
POLYMERISATIONSKATALYSATORSYSTEME, IHRE HERSTELLUNG UND VERWENDUNG
SYSTEMES CATALYSEURS DE POLYMERISATION, PRODUCTION ET UTILISATION DE CES SYSTEMES

(30) Priority: 19.11.1993 US 155313
(43) Date of publication of application: 04.09.1996
(73) Proprietor: EXXON CHEMICAL PATENTS INC., Baytown, TX 77520-5200 (US)
(72) Inventor: JEJELOWO, Moses, Olukayode, Kingwood, TX 77345 (US); HLATKY, Gregory, George, Katy, TX 77450 (US)
(74) Representative: Dew, Melvyn John
(86) International application number: US9410171
(87) International publication number: WO9514044

(56) References cited:
- EP-A- 0 560 128
- WO-A-93/19103
- WO-A-94/03506

## Description

### FIELD OF THE INVENTION

This invention relates to catalysts, catalyst systems and to methods for their production and use in olefin polymerization. Particularly, the invention is directed toward a supported ion-exchange catalyst especially useful in the gas phase polymerization of olefins.

### BACKGROUND OF THE INVENTION

A new catalyst technology has developed which provides for the modification and/or control over the properties and characteristics of a polymer. This technology principally involves the general field of transition metal catalysis.

These new catalysts can be referred to as bulky ligand transition metal catalysts. The bulky ligand contains a multiplicity of bonded atoms, preferably carbon atoms, forming a group which can be cyclic. The bulky ligand may be a cyclopentadienyl ligand or cyclopentadiene-derived ligand which can be mono- or poly-nuclear. One or more bulky ligands may be π-bonded to the transition metal atom. The transition metal atom may be a Group 4, 5 or 6 transition metal. Other ligands may be bonded to the transition metal, such as a hydrocarbyl or halogen leaving group at least one of which is detachable by a cocatalyst. The catalyst is derivable from a compound of the formula:

[L]ₘM[X]ₙ

wherein L is the bulky ligand a, X is the leaving group, M is the transition metal and m and n are such that the total ligand valency corresponds to the transition metal valency. Preferably the catalyst is four co-ordinate such that the compound is ionizable to a 1+ charge state.

The ligands L and X may be bridged to each other and if two ligands L and/or X are present, they may be bridged. The metallocenes may be full-sandwich compounds having two or more ligands L which may be cyclopentadiene ligands or cyclopentadiene-derived ligand or π-bonded to the metal atom or half-sandwich compounds having one ligand L which is a cyclopentadienyl ligand or derived ligand.

Generally, these bulky catalysts are referred to as metallocene catalysts. Polymerization of olefins with metallocene catalysts requires their activation, such as by an alumoxane cocatalyst. Metallocene-alumoxane catalysts have been described in EP-A-0 129 368, published July 26, 1989, U.S. Patent Nos. 4,897,455, 4,937,299, 5,017,714, 5,057,475, 5,086,025, 5,120,867, and 5,324,800. For instance, U.S. Patent No. 5,057,475 and related U.S. Patent No. 5,227,440 described a supported catalyst system that includes an inert support material, a Group IVB transition metal component and an alumoxane component.

EP-A-0 277 003 and EP-A- 0 277 004, published August 3, 1987, PCT International Publication WO 91/09882, published July 11, 1991 and WO 92/0333 describe a Group 4 transition metal metallocene catalyst system that does not require alumoxane as an activator. The activator for the metallocene component described in these references is referred to as an ionic activator, ionizing activator or a non-coordinating anion which comprises at least one moiety capable of abstracting a ligand from the bulky ligand compound to produce a resulting cationic bulky ligand compound and an anionic activator compound. The ionic activator, which comprises a cation, irreversibly reacts with a ligand of a bulky ligand transition metal compound to produce a bulky ligand transition metal cation which combines with the anion of the activator to form an ionic pair. This ionic pair is the active catalyst.

U.S. Patent No. 5,153,157 describes a catalyst system of a reaction product of a bis(cyclopentadienyl) Group IVB metal compound, an ionic activator and an organometallic additive compound.

U.S. Patent No. 5,198,401 relates to a composition of matter of a Group IVB bis(cyclopentadienyl) metal cation non-coordinating anion.

PCT International Publication WO 91/09882 discloses a supported polymerization ionic catalyst where the metallocene is a bis(cyclopentadienyl) metal compound.

U.S. Patent No. 5,064,802 is directed towards a monocyclopentadienyl or substituted monocyclopentadienyl metal complex and a non-coordinating anion. A general statement is made that such catalysts can be supported on silica or alumina.

PCT International Publication WO 93/14132, published July 22, 1993 discloses a cationic complex of a Group 4 metal cyclopentadienyl derivative and an alumoxane.

PCT International Publication WO 93/19104, published September 30, 1993 discloses a Group 4 metal in a +3 oxidation state with an activating cocatalyst which can be alumoxanes and Lewis acids or mixtures thereof. This reference discloses that these catalysts can be supported.

WO-94/07927 filed prior to the priority date of this application discloses on page 13 supporting monocyclopentedienyl transition metal compound and a non-coordinating anion on a support.

WO-94/03506 filed before the priority date also discloses on page 4 a similar support where the support is pre-treated with an aluminum alkyl before contact with the catalyst.

It is desirable in many polymerization processes, particularly a gas phase process, to use a supported catalyst. Generally, these catalyst systems include a metallocene and alumoxane supported on the same carrier, such as silica, and subsequently dried to a powder. For example, U.S. patent No. 4,937,217 generally describes a mixture of trimethylaluminum and triethylaluminum added to an undehydrated silica followed by the addition of a metallocene to form a dry catalyst. EP-308177-B1 generally describes adding a wet monomer to a reactor containing a metallocene, trialkylaluminum and dehydrated silica. U.S. Patent Nos. 4,912,075, 4,935,937 and 4,937,301 generally relate to adding trimethylaluminum to an undehydrated silica and then adding a metallocene to form a dry supported catalyst. Similarly, U.S. Patent Nos. 5,008,228, 5,086,025 and 5,147,949 generally describe forming a dry supported catalyst by the addition of trimethylaluminum to a water impregnated silica followed by the addition ofthe metallocene. U.S. Patent No. 4,914,253 describes adding trimethylaluminum to undehydrated silica, adding a metallocene and then drying the catalyst with an amount of hydrogen to produce a polyethylene wax. U.S. Patent Nos. 4,808,561, 4,897,455 and 4,701,432 describe techniques to form a supported catalyst where the inert carrier, typically silica, is calcined and contacted with a metallocene(s) and a activator/cocatalyst component. U.S. Patent No. 5,238,892 describes forming a dry supported catalyst by mixing a metallocene with an alkyl aluminum then adding undehydrated silica. U.S. Patent No. 5,240,894 generally pertains to forming a supported metallocene/alumoxane catalyst system by forming a metallocene/alumoxane reaction solution, adding a porous carrier, evaporating the resulting slurry to remove residual solvent from the carrier. EP-A-522,581, published January 13, 1993 discloses an olefin polymerization catalyst of a Group IVB transition metal compound and a compound capable of forming an ionic complex with the transition metal compound on a carrier and an organoaluminum compound. These references all concern the combination of a metallocene and alumoxane on one supported or hydrolyzing an aluminum alkyl in situ on one support with a metallocene catalyst compound.

It would be desirable to have a polymerization catalyst system that could be easily modified without having to reformulate the entire catalyst system thus, a need exists in the industry for an improved catalyst system and method for producing such a catalyst system.

### SUMMARY OF THE INVENTION

The invention provides a catalyst system comprising:
(i) a first component comprising supported on a carrier
   (a) a monocyclopentadienyl transition metal bulky ligand compound; and
   (b) an ionic activator; and
(ii) a second component comprising
   (a) a further carrier; and
   (b) an organometallic compound supported on that further carrier.

More particularly, the present invention is directed to a gas phase process for polymerizing olefins, alone or in combination with one or more other olefins, with a supported ionic catalyst, the catalyst comprising a monocyclopentadienyl ligand transition metal containing compound, an ionic activator and a supported organometallic compound in which the transition metal compound and the activator may be separately supported also.

### DETAILED DESCRIPTION OF THE INVENTION

### Introduction

This invention is generally directed toward a supported catalyst system useful for polymerizing olefins. The method for forming the catalyst system of the invention provides for combining a monocyclopentadienyl bulky ligand transition metal catalyst system with a separately supported organometallic compound. A preferred method provides for supporting the catalyst system on a carrier and contacting such supported system with a separately supported organometallic compound. The ionic metallocene catalyst systems of the invention have unexpectedly high activity as compared to the catalyst systems previously described.

### PROCESS OF THE INVENTION

The catalyst system of this invention is particularly well suited for the polymerization of monomers and optionally comonomers in any polymerization or prepolymerization process, gas, slurry or solution phase; a high pressure autoclave process can be also utilized. In the preferred embodiment a gas phase process is utilized.

The preferred embodiment of the process of this invention is directed toward a gas phase polymerization or copolymerization reaction involving the polymerization or optionally prepolymerization of one or more olefins, monoolefins, diolefins, cyclic olefins and acetylenically unsaturated monomers. Preferably, the monomers are ethylene and alpha-olefins having from 3 to 20 carbon atoms, most preferably 3-12 carbon atoms. The invention is particularly suitable for copolymerization reactions involving polymerization of one or more of the monomers, for example alpha-olefin monomers of ethylene, propylene, butene-1, pentene-1, 4-methylpentene-1, hexene-1, octene-1, decene-1, cyclic olefins such as norbornene and alpha-olefins substituted with aryl groups such as styrene. Other monomers can include vinyl, diene, norbornene, acetylene and aldehyde monomers. Preferably, a homopolymer of ethylene or a copolymer of ethylene and a C₃ to C₁₀ alpha-olefin is produced such that the amount of ethylene or C₃ to C₁₀ alpha-olefin and comonomer is adjusted to produce a desired polymer product. Preferably the comonomer is an alpha-olefin having from 3 to 15 carbon atoms, preferably 4 to 12 carbon atoms and most preferably 4 to 10 carbon atoms. In another embodiment ethylene is polymerized with at least two comonomers to form a terpolymer and the like. Most preferred comonomers for polymerization with ethylene are butene-1, hexene-1, 4-methy-1-pentene and octene-1.

In another embodiment of the process of the invention, the olefin(s) are prepolymerized in the presence of the catalyst system of the invention to form a prepolymerized catalyst prior to the main polymerization. The prepolymerization can be carried out batchwise or continuously in gas, solution or slurry phase including at elevated pressures. The prepolymerization can take place with any of the above described monomers, and/or in the presence of any molecular weight controlling agent such as hydrogen. For details on prepolymerization see, for example U.S. Patent No. 4,923,833 and 4,921,825 and EP-B-0279 863.

In a gas phase polymerization process a continuous cycle is typically employed wherein one part of the cycle of a reactor, a cycling gas stream (otherwise known as a recycle stream or fluidizing medium) is heated in the reactor by the heat of polymerization. This heat is removed in another part of the cycle by a cooling system external to the reactor.

Generally, in a gas fluidized bed process for producing polymer from monomers, a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and new or fresh monomer is added to replace the polymerized monomer.

The catalyst is introduced into the reactor via a catalyst feeder mechanism either continuously or intermittently as is known in the art. Usually the catalyst is contained in a vessel with a mechanism for controlling the quantity of catalyst to be injected into the reactor. Typically the catalyst is blown into the reactor with a gas such as nitrogen. Many times these systems have multiple catalyst feeders and injection points for introducing catalyst into a reactor. The invention provides for a process for polymerizing olefins alone or in combination with one or more other olefins in a gas phase reactor, said process comprising polymerization in the presence of a catalyst system which is introduced into the reactor, the catalyst comprising (a) a monocyclopentadienyl transition metal compound, an ionic activator and (b) a supported organometallic compound. In another embodiment the catalyst system of the invention is at least a two component system where a first component (a) comprises a carrier, a monocyclopentadienyl transition metal compound and an ionic activator and a second component (b) comprising a carrier and an organometallic compound.

In one embodiment of the invention components (a) and (b) are introduced into the reactor simultaneously from the same or different catalyst feeder. In another embodiment components (a) and (b) are introduced into the reactor together or apart. In still Yet another embodiment components (a) and (b) are introduced into the reactor mixed together.

It is also contemplated in an alternative embodiment that the first component could comprise a mixture of a bulky ligand transition metal compound and a traditional Ziegler-Natta catalyst compound, other non-bulky ligand transition metal compound, or non-metallocene compound. Thus, the same is true for the activator component of the invention which could include any activator for the traditional Ziegler-Natta catalyst or non-metallocene compound alone or in combination with those activators and catalysts previously described.

For the preferred monomer, ethylene, depending on the catalyst, the (comonomer to ethylene) Cₓ/C₂ ratios are preferably less than 0.2, and more preferably less than 0.1, and as low as 0.02 to provide a polymer having a density in the range of from 0.86 g/cm³ to 0.96 g/cm³, preferably 0.88 g/cm³ to 0.94 g/cm³ and most preferably between 0.90 g/cm³ to 0.935 g/cm³.

The reactivity ratios of the catalysts and catalyst systems of this invention are in the range of less than 2 to 0.1, generally less than 2, preferably less than 1.5 and more preferably less than 1 and most preferably less than 0.5. Reactivity ratio is defined to be the mole ratio of comonomer to monomer in the recycle stream (Cₓ/C_{y}) divided by the mole ratio of comonomer to monomer (Cₓ/C_{y}) in the polymer produced, where Cₓ is the mole percent of comonomer and C_{y} is the mole percent of the monomer.

The supported ionic transition metal catalysts suitable for use in the process of this invention preferably comprise an ionic transition metal catalyst and an organometallic compound on a suitable support material or carrier. The transition metal component of the ionic catalysts may be selected from a cyclopentadienyl (Cp) derivative of a Group 4, 5 and 6, preferably Group 4 transition metal or mixtures thereof (new IUPAC nomenclature based on Periodic Table of Elements as described in Chemical and Engineering News, 63(5) 27, 1985) such metal compound containing at least one ligand which will combine with an ionic activator component or at least a portion thereof such as a cation portion thereof.

The ionic catalyst component, which comprises a cation, irreversibly reacts with at least one ligand of the bulky ligand transition metal component to produce a bulky ligand transition metal cation which combines with the anion of the activator to form an ionic pair which is a chemically stable, non-nucleophilic anionic complex. These can be single coordination complexes comprising a plurality of lipophilic radicals covalently coordinated to and shielding a central formal charge-bearing metal or metalloid atom or an anion which comprises a plurality of boron atoms such as polyhedral boranes, carboranes, and metallacarboranes. The anions are bulky, typically 4 angstroms or greater, labile and stable to any reaction involving the cation of the activator component. The anion may be any suitably substituted anion which is not hydrolyzed by aqueous solutions.

Upon combination of the transition metal component and the activator, there is generated an ion pair comprising a metal cation with a formal coordination number and metal cation, which formed from the transition metal component. Where the transition metal is a Group 4 metal cation, the formal coordination number is 3 or 4 and a valence of +4. Optionally a Group 4 transition metal complex in a +3 oxidation state may be activated with an ionic activator to form an active catalyst. The anion of the ionic activator compound is in the preferred embodiment capable of stabilizing the metal cation complex without interfering with the ability of the metal cation or its decomposition product to function as a catalyst.

European Patent Applications EP-A-0 277 003, EP-A-0 277 004, EP-A-0 500 944, EP-A-0 520 732, PCT International Application WO 92/00333 and U.S. Patent Nos. 5,064,802, 5,153,157, 5,198,401, and 5,241,025 describe the homogeneous variants of ionic catalysts.

### The Transition Metal Component of the Invention

The transition metal compounds, useful as first compounds in the preparation of the improved catalyst of this invention are preferably η⁵-monocyclopentadienyl transition metal compounds of Group 4, 5 or 6, preferably Group 4 transition metals or mixtures thereof. The class of transition metal components suitable for use in the process of the present invention are bulky ligand transition metal component comprising a transition metal, a mono-cyclopentadienyl radical, optionally a bridging group, a heteroatom and at least one leaving group. A preferred subclass of transition metal components or metallocene of the invention comprise a transition metal π-bonded to a mono-cyclopentadienyl ligand; the mono-cyclopentadienyl ligand is optionally but preferably bridged by way of a bridging group to a heteroatom; the heteroatom is bonded to the transition metal; and at least one leaving group is bonded to the transition metal.

The most preferred subclasses of useful transition metal components are represented by the following general formulae: 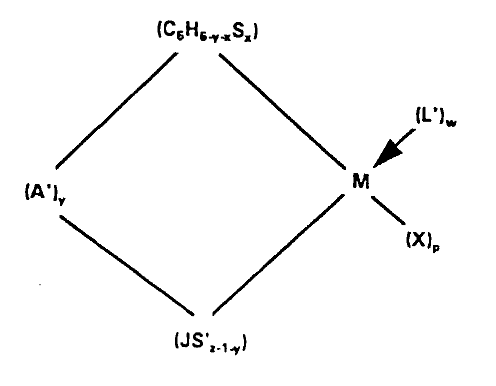
A' is a bridging group containing a Group 14 element;
(C₅H_{5-y-x}Sₓ) or (C₅H₅₋ₓXₓ) is a Cp ring substituted with from zero to five S radicals, each substituent group S being, independently, a radical group which is a hydrocarbyl, substituted-hydrocarbyl, halocarbyl, substituted-halocarbyl, hydrocarbyl-substituted organometalloid, halocarbyl-substituted organometalloid, hydrocarbyl-substituted boron, hydrocarbyl-substituted pnictogen, hydrocarbyl-substituted chalcogen or halogen or two adjacent S groups are joined forming a C₄ to C₂₀ ring to give a saturated or unsaturated polycyclic Cp ligand;
x is from 0 to 5 denoting the degree of substitution;
M is a Group 4 transition metal;
wherein:
L' is a neutral Lewis base;
X is, independently, hydride radicals, hydrocarbyl radicals, substituted hydrocarbyl radicals, halocarbyl radicals, substituted halocarbyl radicals, and hydrocarbyl- and halocarbyl-substituted organometalloid radicals or X may optionally be covalently bonded to M and L' or all and any M, S, and S'; or, if p is 2, two X may be joined and bound to the metal atom to form a metallocyclic ring containing from 3 to 20 carbon atoms provided that X is not a substituted or unsubstituted Cp ring as previously defined; and
(JS'_{z-1-y}) or (JS'_{z-2}) is a heteroatom ligand in which J is an element from Group 15 of the Periodic Table of Elements with a coordination number of 3 or an element from Group 16 with a coordination number of 2; S' is a radical group which is a hydrocarbyl, substituted hydrocarbyl, halocarbyl, substituted halocarbyl, hydrocarbyl-substituted organometalloid, or halocarbyl-substituted organometalloid; z is the coordination number of the element J;
y is 0 or 1, preferably y is 1
w is an integer from 0 to 1; and
p is an integer from 1 to 2.

Examples of bridging groups A' include but are not limited to R₂C, R₂Si, R₂Ge, R₂CR₂C, R₂SiR₂Si, R₂GeR₂Ge, R₂CR₂Si, R₂CR₂Ge R₂CR₂CR₂C, R₂SiOR₂Si diradicals where R is independently selected from the group containing hydride, halogen radicals, and C₁₋₂₀ hydrocarbyl radicals. Preferably, A' has a bridge length of two atoms or less as in methylene, ethylene, diphenylsilyl, dimethylsilyl or methylphenylsilyl.

Examples of substituent groups S include but are not limited to C₁₋₂₀ hydrocarbyl radicals including C₁₋₂₀ linear and branched alkyl radicals such as methyl, ethyl, propyl, butyl, pentyl, hexyl, heptyl, octyl, nonyl, decyl, C₁₋₂₀ hydrocarbyl-substituted and unsubstituted cyclic aliphatic and polycyclic aliphatic radicals such as cyclopropyl, cyclobutyl, cyclopentyl, cyclohexyl, phenylcyclohexyl, methylcyclohexyl, cycloheptyl, cyclooctyl, cyclodecyl, cyclododecyl, isopropyldodecyl, adamantyl, norbornyl, tricyclo[5.2.1.0]decyl, C₁₋₂₀ hydrocarbyl-substituted and unsubstituted aryl radicals including phenyl, methylphenyl, trimethylphenyl, cyclohexylphenyl, napthyl, butylphenyl, butyldimethylphenyl; C₁₋₂₀ substituted hydrocarbyl radicals including benzyl, N,N-dimethylaminobenzyl, N,N-dimethylaminomethyl, methoxymethyl, diphenylphosphinomethyl, fluorophenyl, trifluoromethylphenyl, fluoromethyl, cyanoethyl; C₁₋₂₀ linear and branched halocarbyl radicals including trifluoromethyl, perfluoroethyl, perfluoropropyl, perfluorobutyl, perfluorophenyl, chlorodifluoromethyl, chlorotetrafluorophenyl, bromotetrafluorophenyl, iodotetrafluorophenyl; C₁₋₂₀ substituted-halocarbyl radicals such as methyltetrafluorophenyl, N,N-dimethyldifluoromethyl, methoxyperflouroethyl; C₁₋₂₀ hydrocarbyl-substituted organometalloid radicals including trimethylsilyl, trimethylgermyl, triphenylsilyl, triphenylgermyl; C₁₋₂₀ halocarbyl-substituted organometalloid radicals including tris(trifluoromethyl)silyl, tris(trifluoromethyl)germyl, tris(perfluorophenyl)silyl, tris(perfluorophenyl)germyl; C₁₋₂₀ hydrocarbyl-substituted boron radicals including dimethylboranyl, diphenylboranyl; C₁₋₂₀ hydrocarbyl-substituted pnictogen radicals including N,N-dimethylamino, diphenylamino, diphenylphosphine, dimethylphosphino; C₁₋₂₀ hydrocarbyl-substituted chalcogen radicals including methoxy, ethoxy, butoxy, phenoxy, methylthio, ethylthio, phenylthio, and halogen radicals including fluoro, chloro, bromo, and iodo.

Examples of neutral Lewis base ligands (L') include but are not limited to diethylether, dimethylether, N,N-dimethylaniline, trimethylamine, triphenylamine, triethylamine, triphenylphosphine, trimethylphosphine, thiophene, dimethylsulfide, benzyne, ethylene, propylene, butene, 1,4-hexadiene and acetylene.

X is independently a univalent anionic ligand including but not limited to hydride, C₁₋₂₀ hydrocarbyl radicals including C₁₋₂₀ linear and branched alkyl radicals such as methyl, ethyl, propyl, butyl, pentyl, hexyl, heptyl, octyl, nonyl, decyl, C₁₋₂₀ hydrocarbyl-substituted and unsubstituted cyclic aliphatic and polycyclic aliphatic radicals such as cyclopropyl, cyclobutyl, cyclopentyl, cyclohexyl, phenylcyclohexyl, methylcyclohexyl, cycloheptyl, cyclooctyl, cyclodecyl, cyclodocecyl, isopropyldodecyl, adamantyl, norbornyl, tricyclo[5.2.1.0]decyl, C₁₋₂₀ hydrocarbyl-substituted and unsubstituted aryl radicals including phenyl, methylphenyl, trimethylphenyl, cyclohexylphenyl, butylphenyl, butyldimethylphenyl; C₁₋₂₀ substituted hydrocarbyl radicals including benzyl, N,N-dimethylaminobenzyl, N,N-dimethylaminomethyl, methoxyhexyl, diphenylphosphinodecyl, fluorophenyl, trifluoromethylphenyl, fluoromethyl; C₁₋₂₀ hydrocarbyl-substituted organometalloid radicals including trimethylsilyl, trimethylgermyl, triphenylsilyl, triphenylgermyl; C₁₋₂₀ halocarbyl-substituted organometalloid radicals including tris(trifluoromethyl)silyl, tris(trifluoromethyl)germyl, tris(perfluorophenyl)silyl, tris(perfluorophenyl)germyl. Optionally if p is 2, two X's may form a metallocycle with the metal such as methylidene, ethylidene or propylidene. In all cases, X is not a Cp ring as defined by (C₅H_{5-y-x}Sₓ).

Examples of S' include but are not limited to C₁₋₂₀ hydrocarbyl radicals including C₁₋₂₀ linear and branched alkyl radicals such as methyl, ethyl, propyl, butyl, pentyl, hexyl, heptyl, octyl, nonyl, decyl, C₁₋₂₀ hydrocarbyl-substituted and unsubstituted cyclic aliphatic and polycyclic aliphatic radicals such as cyclopropyl, cyclobutyl, cyclopentyl, cyclohexyl, phenylcyclohexyl, methylcyclohexyl, cycloheptyl, cyclooctyl, cyclodecyl, cyclododecyl, isopropyldodecyl, adamantyl, norbornyl, tricyclo[5.2.1.0]decyl, C₁₋₂₀ hydrocarbyl-substituted and unsubstituted aryl radicals including phenyl, methylphenyl, trimethylphenyl, cyclohexylphenyl, napthyl, butylphenyl, butyldimethylphenyl; C₁₋₂₀ substituted hydrocarbyl radicals including benzyl, N,N-dimethylaminobenzyl, N,N-dimethylaminomethyl, methoxymethyl, diphenylphosphinomethyl, fluorophenyl, trifluoromethylphenyl, fluoromethyl, cyanoethyl; C₁₋₂₀ linear and branched halocarbyl radicals including trifluormethyl, perfluoroethyl, perfluoropropyl, perfluorobutyl, perfluorophenyl, chlorodifluoromethyl, chlorotetrafluorophenyl, bromotetrafluorophenyl, iodotetrafluorophenyl; C₁₋₂₀ substituted-halocarbyl radicals such as methyltetrafluorophenyl, N,N-dimethyldifluoromethyl, methoxyperflouoroethyl; C₁₋₂₀ hydrocarbyl-substituted organometalloid radicals including trimethylsilyl, trimethylgermyl, triphenylsilyl, triphenylgermyl; C₁₋₂₀ halocarbyl-substituted organometalloid radicals including tris(trifluoromethyl)silyl, tris(trifluoromethyl)germyl, tris(perfluorophenyl)silyl, tris(perfluorophenyl)germyl.

Table I depicts representative constituent moieties for the transition metal component.

Transition metal compound precursors providing tacticity control for the stereospecific polymerization of prochiral olefins, propylene, or higher alpha-olefins, exist when A' acts to restrict rotation of Cp ring and/or the Cp ring is of sufficient bulk to restrict rotation such that the appropriate symmetry conditions are satisfied.

In one embodiment preferably prochiral transition metal compounds for the production of isotactic polymers are those where A' is a bridging group and the substituents on Cp are chosen such that 1) the steric difference between Cp and the heteroatom is maximized and 2) the absence of a plane of symmetry through the metal center and the carbon atoms on the Cp and heteroatom which are bonded to A'. For the production of syndiotactic polymers the second condition requires the presence of a plane of symmetry through the metal center and the carbon atoms on the Cp and heteroatom which are bonded to A'.

In another embodiment the transition metal component are represented by the following general formula:

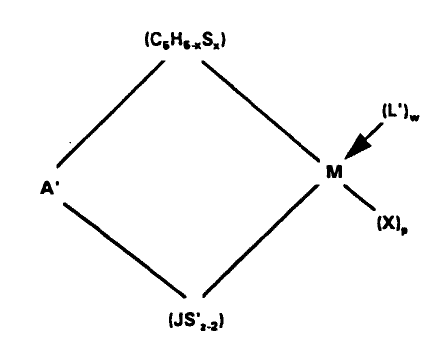

For the formula above the definitions are as presented above.

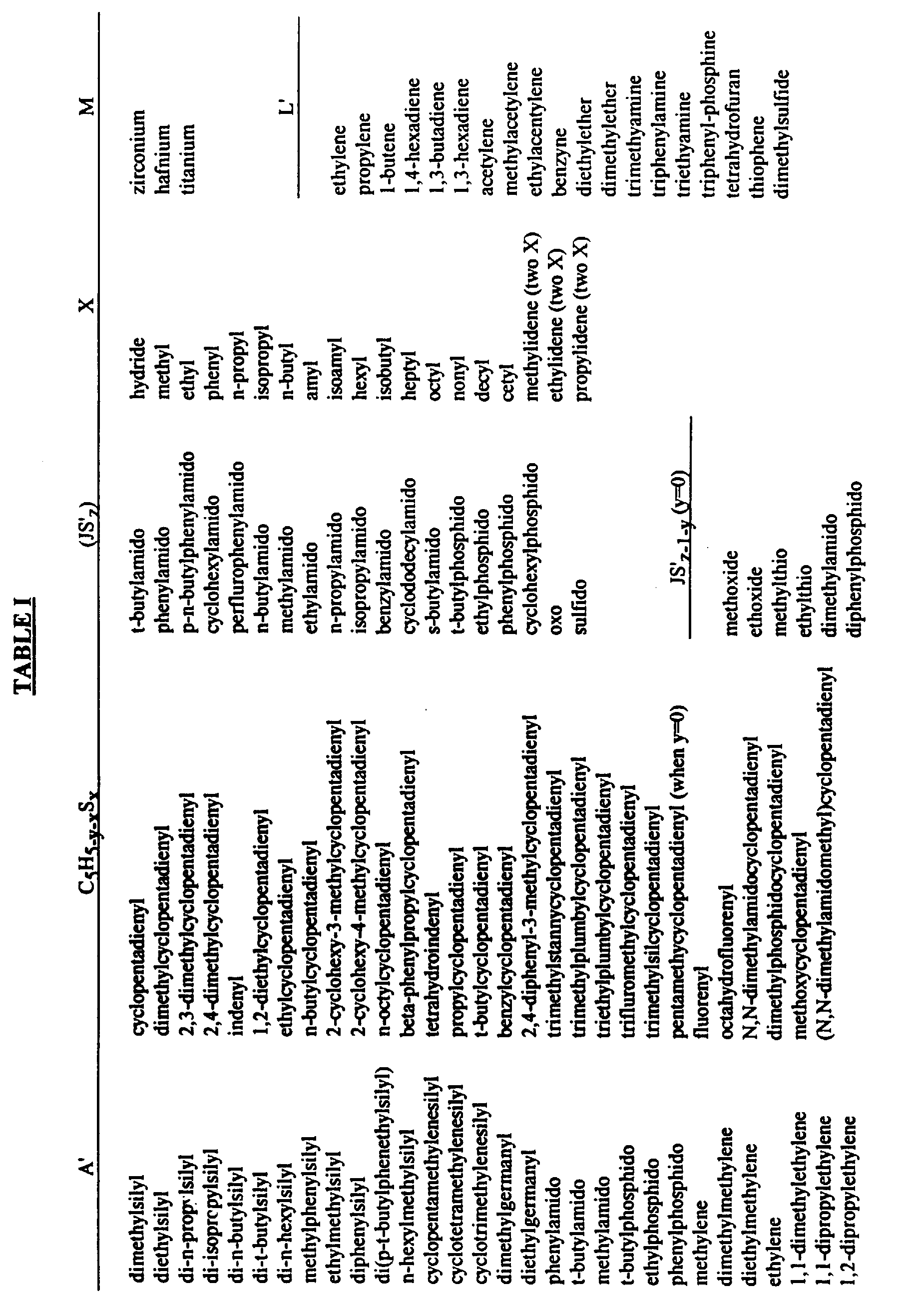

### The Ionic Activator Component of the Invention

Compounds useful as an activator component in the preparation of the ionic catalyst systems used in the process of this invention comprise a cation, which may be a Bronsted acid capable of donating a proton, and a compatible non-coordinating anion. The anion in the preferred embodiment is relatively large or bulky and capable of stabilizing the active catalyst species (the Group 4, 5 or 6 transition metal cation) which is made when the ionic pair is formed. The anion should be sufficiently labile to be displaced by olefinic, diolefinic, and acetylenically unsaturated substrates or other neutral Lewis bases such as ethers, nitriles and the like. Two classes of compatible non-coordinating anions have been disclosed in EP-A-277 003 and EP-A-277 004: 1) anionic coordination complexes comprising a plurality of lipophilic radicals covalently coordinated to and shielding a central charge-bearing metal or metalloid core, and 2) anions comprising a plurality of boron atoms such as carboranes, metallacarboranes and boranes.

In one embodiment, the activator compounds comprising single anionic coordination complexes which are useful in the process ofthis invention are represented by the following general formula:

[(L'-H)]^{c+}[(M')^{m+}Q₁Q₂...Qₙ]^{d-}

wherein:
H is a hydrogen atom;
[L'-H] is a Bronsted acid;
M' is a metal or metalloid;
Q₁ to Qₙ are, independently, hydride radicals, bridged or unbridged dialkylamido radicals, alkoxide and aryloxide radicals, substituted-hydrocarbyl radicals, halocarbyl and substituted-halocarbyl radicals and hydrocarbyl- and halocarbyl-substituted organometalloid radicals and any one, but not more than one, Q₁ to Qₙ may be a halide radical;
m is an integer representing the formal valence charge of M'; and
n is the total number of Q ligands.

As indicated above, any metal or metalloid capable of forming an anionic complex which, preferably, is stable in water may be used or contained in the anion of the ionic activator. Suitable metals include but are not limited to aluminum, gold, platinum. Suitable metalloids include, but are not limited to, boron, phosphorus, silicon. Compounds containing anions which comprise coordination complexes containing a single metal or metalloid atom are well known and many, particularly such compounds containing a single boron atom in the anion portion, are commercially available. In a preferred embodiment salts containing anions comprising a coordination complex containing a single boron atom are preferred.

In another embodiment, the preferred ionic activator compounds comprising boron may be represented by the following general formula:

[L'-H]+[BAr₁Ar₂X₃X₄]-

wherein:
B is boron in a valence state of 3;
Ar₁ and Ar₂ are the same or different substituted-aromatic hydrocarbon radicals containing from 6 to 20 carbon atoms and may be linked to each other through a stable bridging group; and
X₃ and X₄ are, independently, hydride radicals, hydrocarbyl and substituted-hydrocarbyl radicals, hydrocarbyl- and halocarbyl-substituted organometalloid radicals, disubstituted pnictogen radicals, substituted chalcogen radicals and halide radicals, with the proviso that X₃ and X₄ will not be halide at the same time.

In general, Ar₁ and Ar₂ may, independently, be any substituted-aromatic hydrocarbyl radical. Suitable aromatic radicals include, but are not limited to, naphthyl and anthracenyl radicals. Suitable substituents on the substituted-aromatic hydrocarbyl radicals, include, but are not necessarily limited to, hydrocarbyl radicals, organometalloid radicals, alkoxy and aryloxy radicals, alkylamido radicals, fluorocarbyl and fluorohydrocarbyl radicals and the like such as those useful as X₃ and X₄. The substituent may be ortho, meta or para, relative to the carbon atoms bonded to the boron atom. When either or both X₃ and X₄ are a hydrocarbyl radicals, each may be the same or a different substituted-aromatic radical as are Ar₁ and Ar₂, or the same may be a straight or branched alkyl, alkenyl or alkynyl radical, a cyclic hydrocarbon radical or an alkylsubstituted cyclic hydrocarbon radical. X₃ and X₄ may also, independently be alkoxy or dialkylamido radicals wherein the alkyl portion of said alkoxy and dialkylamido radicals are hydrocarbyl radicals, organometalloid radicals and the like. As indicated above, Ar₁ and Ar₂ could be linked to either X₃ or X₄ and/or X₃ and X₄ may also be linked to each other through a suitable bridging group.

Examples of preferred boron compounds which may be used as the ionic activator component are trialkyl-substituted ammonium salts such as trimethylammonium tetra(p-toly)boron, trimethylammonium tetra(o-toly)boron, tributylammonium tetrakis(pentafluorophenyl)borate, tripropylammonium tetra(o,p-dimethylphenyl)boron, tributylammonium tetra(m,m-dimethylphenyl)boron, tributylammoniumtetra(p-tri-fluoromethylphenyl)boron, tri(n-butyl)ammonium tetra(o-toly)boron: dialkyl ammonium salts such as di(i-propyl)ammonium tetrakis(pentafluorophenyl)borate.

Similar lists of suitable compounds containing other metals and metalloids which are useful as activator components may be made, but such lists are not deemed necessary to a complete disclosure. In this regard, it should be noted that the foregoing list is not intended to be exhaustive and that other useful boron compounds as well as useful compounds containing other metals or metalloids would be readily apparent to those skilled in the art from the foregoing general equations, see for example, U.S. Patent Nos. 5,153,157 and 5,064,802.

The most preferred activator compounds comprising boron may be represented by the following general formula:

[L'-H]⁺[B(C₆F₅)₃Q]⁻

wherein:
F is fluorine, C is carbon and B is boron, L' and Q are as defined above. Illustrative but not limited, examples of most preferred activator compounds comprising boron which may be used in the preparation of the improved catalysts of this invention include N,N-dialkylanilinium salts (L' = N,N- dialkylaniline) where Q is a simple hydrocarbyl such as methyl, butyl, cyclohexyl, or substituted phenyl or where Q is a polymeric hydrocarbyl of indefinite chain length such as polystyrene, polyisoprene, or poly-paramethylstyrene. Polymeric Q substituents on the most preferred anion offer the advantage of providing a highly soluble ion-exchange activator component and final ionic catalyst. Soluble catalysts and/or precursors are often preferred over insoluble waxes, oils, phases, or solids because they can be diluted to a desired concentration and can be transferred easily using simple equipment in commercial processes.

Activator components based on anions which contain a plurality of boron atoms may be represented by the following general formulae:

[L'-H]^{c}[(CX)ₐ(BX')ₘX"_{b}]^{c-}

or

[L'-H]^{d'}[[[(CX₆)_{a'}(BX₇)_{m'}(X₈)_{b}']^{c'}-]2M"^{n'}+]_{d'-}

wherein:
[L'-H] is either H+ or a Bronsted acid derived from the protonation of a neutral Lewis base;
X, X', X", X₆, X₇ and X₈ are, independently, hydride radicals, halide radicals, hydrocarbyl radicals, subsituted-hydrocarbyl radicals, hydrocarbyl- or halocarbyl- substituted organometalloid radicals;
M" is a transition metal;
a and b are integers ≥ 0; c is an integer ≥ 1; a + b + c = an even-numbered integer from 2 to 8; and m is an integer ranging from 5 to 22;
a' and b' are the same or different integer 0; c' is an integer ≥ 2; a' + b' + c' = an even-numbered integer from 4 to about 8; m' is an integer from 6 to about 12; n' is an integer such that 2c' - n' = d'; and d' is an integer ≥ 1.

In another embodiment the anions comprising at least one or a plurality of boron atoms comprise:
(1) A trisubstituted ammonium salt of a borane or carborane anion satisfying the general formula:

   [(CH)ₐₓ(BH)_{bx}]^{cx-}

   wherein:
   ax is either 0 or 1; cx is either 1 or 2; ax + cx = 2; and bx is an integer ranging from 10 to 12;
(2) A trisubstituted ammonium salt of a borane or carborane or a neutral borane or carborane compound satisfying the general formula:

   [(CH)_{ay}(BH)_{my}(H)_{by}]^{cy-}

   wherein:
   ay is an integer from 0 to 2; by is an integer from 0 to 3; cy is an integer from 0 to 3; ay + by + cy = 4; and my is an integer from 9 to 18; or
(3) A trisubstituted ammonium salt of a metallaborane or metallacarborane anion satisfying the following general formula:

   [[[(CH)_{az}(BH)_{mz}(H)_{bz}]^{cz-}]₂M"^{nz+}]^{dz-}

   wherein:
   az is an integer from 0 to 2; bz is an integer from 0 to 2; cz is either 2 or 3; mz is an integer from 9 to 11; az + bz + cz = 4; and nz and dz are respectively, 2 and 2 or 3 and 1.

Illustrative, but non limiting, examples of ionic activators which can be used in preparing catalyst systems utilized in the process of this invention wherein the anion of the ionic activator contains a plurality of boron atoms are mono-, di-, trialkylammonium and phosphonium and dialkylarylammonium and -phosphonium salts such as bis[tri(n-butyl)ammonium]dodecaborate, bis[tri(n-butyl)ammonium]decachlorodecaborate,tri(n-butyl)ammonium dodecachlorododecaborate, tri(n-butyl)ammonium 1-carbadecaborate, tri(n-butyl)ammonium 1-carbaudecaborate, tri(n-butyl)ammonium 1-carbadecaborate, tri(n-butyl)ammonium dibromo-1-carbadodecaborate; borane and carborane complexes and salts of borane and carborane anions such as decaborane (14), 7,8-dicarbaudecaborane (13), 2,7-dicarbaundecaborane (13), undecahydrideo-7,8-dimethyl-7, 8-dicarbaundecaborane, tri(n-butyl)ammonium 6-carbadecaborate (12), tri(n-butyl)ammonium 7-carbaundecaborate, tri(n-butyl)ammonium 7,8-dicarbaundecaborate and metallaborane anions such as tri(n-butyl)ammonium bis(nonahydride-1,3-dicarbanonaborato) cobaltate (III), tri(n-butyl)ammonium bis(undecahydride-7,8-dicarbaundecaborato) ferrate (III), tri(n-butyl)ammonium bis(undecahydride-7,8-dicarbaundecaborato) cobaltate (III), tri(n-butyl)ammonium bis(undecahydride-7,8-dicarbaunaborato)nickelate (III), tri(n-butyl)ammonium bis(nonahydride-7,8-dimethyl-7,8-dicarbaundecaborato)ferrate (III), tri(n-butyl)ammonium bis(tribromooctahydride-7, 8-dicarbaundecaborato)cobaltate (III), tri(n-butyl)ammonium bis(undecahydridodicarbasdodecaborato) cobaltate (III) and bis[tri(n-butyl)ammonium] bis(undecahydride-7-carbaundecaborato)cobaltate (III). A similar list of representative phosphonium compounds can be recited as, but for the sake of brevity, it is simply noted that the phosphonium and substituted-phosphonium salts corresponding to the listed ammonium and substituted-ammonium salts could be used as ionic activator compounds in the invention.

### Ionic Catalysts of the Invention

In general, while most transition metal components identified above may be combined with most activator components identified above to produce an active olefin polymerization catalyst, it is desirable for continuity of the polymerization operations that either the metal cation initially formed form the transition metal component or a decomposition product thereof be a relatively stable catalyst. It is also desirable that the anion of the activator compound be stable to hydrolysis when an ammonium salt is used. Further, it is desirable that the acidity of the activator component be sufficient, relative to the transition metal component to facilitate the needed proton transfer. In general, Cp transition metal compounds which can be hydrolyzed by aqueous solutions are considered suitable as components to form the catalysts described herein.

With respect to the combination of the transition metal component with the ionic activator component to form a catalyst useful in the process of this invention, it is desirable that the two compounds forming the active ionic pair catalyst preferably should be selected to avoid transfer of a fragment of the anion, particularly an aryl group, to the metal cation, thereby forming a catalytically inactive species. Steric hindrance, resulting from substitutions on the Cp carbon atoms as well as substitutions on the aromatic carbon atoms of the anion can minimize fragmentation. Thus, in a preferred embodiment, transition metal components comprising perhydrocarbyl-substituted Cp radicals are preferred over unsubstituted Cp radicals because substituted Cp radicals can be used with a broader range of ionic activators. As the amount and size of the substitutions on the Cp radicals are reduced in one embodiment, more effective catalysts are obtained with ionic activator compounds containing anions which are more resistant to degradation, such as those with substituents at the ortho positions of phenyl rings. Another means of rendering the anion more resistant to degradation is afforded in one embodiment by fluorine substitution, especially perfluorosubstitution, in the anion. Fluoro-substituted stabilizing anions may be used with broader range of metal compounds. Activators in which the anions comprise pentafluorophenyl groups are preferred for preparing ion-pair transition metal catalysts of this invention. It is preferred that the mole ratio of transition metal component to activator component be 1:1 or greater.

In one embodiment, the catalysts used in this invention can be represented by the following general formulae: 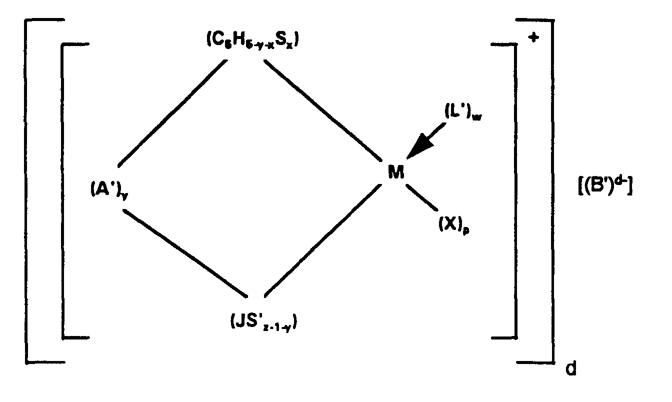 wherein:
A' is a bridging group containing a Group 14 element;
(C₅H_{5-y-x}Sₓ) is a Cp ring substituted with from zero to five S radicals, each substituent group S being, independently, a radical group which is a hydrocarbyl, substituted-hydrocarbyl, halocarbyl, substituted-halocarbyl, hydrocarbyl-substituted organometalloid, halocarbyl-substituted organometalloid, hydrocarbyl-substituted boron, hydrocarbyl-substituted pnictogen, hydrocarbyl-substituted chalcogen or halogen or two adjacent S groups are joined forming a C₄ to C₂₀ ring to give a saturated or unsaturated polycyclic Cp ligand;
x is from 0 to 5 denoting the degree of substitution;
M is a Group 4 transition metal;
L' is a neutral Lewis base;
X is a hydride radical, hydrocarbyl radical, substituted-hydrocarbyl radical, hydrocarbyl-substituted organometalloid radical or halocarbyl-substituted organometalloid radical which radical may optionally be covalently bonded to both or either M and L' or all and any M, S, and S' and X is not a Cp ring as defined above;
(JS'_{z-1-y}) is a heteroatom ligand in which J is an element from Group 15 of the Periodic Table of Elements with a coordination number of 3 or an element from Group 16 with a coordination number of 2; S' is a radical group which is a hydrocarbyl, substituted hydrocarbyl, halocarbyl, substituted halocarbyl, hydrocarbyl-substituted organometalloid, or halocarbyl-substituted organometalloid; and z is the coordination number of the element J;
y is 0 or 1, preferably y is 1
w is an integer from 0 to 1;
B' is a chemically stable, non-nucleophilic anionic complex having a molecular diameter about or greater than 4 angstroms; and
d is an integer representing the charge of B'.

In another embodiment, the Group 4 transition metal complex is in a +3 oxidation state activated by an ionic activator to form an active catalyst.

In one embodiment, the cation portion of the ionic activator may comprise Bronsted acids such as protons, or protonated Lewis bases, or may comprise reducible Lewis acids such as ferricinium, tropylium, triphenylcarbenium or silver cations.

In general, suitable anions of the ionic activator may be any stable and bulky anionic complex having one or more of the following typical molecular attributes: 1) the anion should have a molecular diameter greater than about 4 angstroms; 2) the anion should form stable ammonium salts; 3) the negative charge on the anion should be delocalized over the framework of the anion or be localized within the core of the anion; 4) the anion should be a relatively poor nucleophile; and 5) the anion should not be a powerful reducing or oxidizing agent. In one embodiment, the anions meeting these criteria are for example, polynuclear boranes, carboranes, metallacarboranes, polyoxoanions and anionic coordination complexes are all of which described in the literature.

Upon combination of the transition metal component and the component ionic activator component, the cation ofthe ionic activator reacts with one of the ligands of the transition metal component, generating an anion pair comprising a metal cation and anion.

### Supporting the Ionic Catalyst of the invention

For purposes of this patent specification the term "carrier" or "support" can be any porous support such as talc, inorganic oxides, and resinous support materials such as polyolefin or polymeric compounds.

Suitable inorganic oxide materials which are desirably employed as carriers in accordance with this invention include Group 2, 3, 4, 13, or 14 metal oxides. In a preferred embodiment, the catalyst support materials include silica, alumina, and silica-alumina, and mixtures thereof. Other inorganic oxides that may be employed either alone or in combination with the silica, alumina or silica-alumina are magnesia, titania and zirconia. Other suitable support materials, however, can be employed, for example, finely divided polyolefins such as finely divided polyethylene.

The specific particle size of the support or inorganic oxide, surface area, pore volume, and number of hydroxyl groups are not critical to its utility in the practice of this invention. However, such characteristics determine the amount of support to be employed in preparing the catalyst compositions, as well as affecting the properties of polymers formed. The characteristics of the carrier or support must therefore be taken into consideration in choosing the same for use in the particular invention. In one embodiment the carrier is surface modified with surface modifying agents as described in U.S. Patent No. 5,124,418.

Producing the supported ionic catalyst on, for example, silica, was surprising. It would have been expected that the reaction of the ionic catalyst with a Lewis base, as present on the oxide surface, would result in catalyst deactivation. The metal oxides generally contain surface hydroxyl groups which typically react with and deactivate the ionic transition metal catalyst. Therefore, to achieve a catalytically active system it is preferable that when an inorganic oxide support is used it should be essentially free of adsorbed hydroxyl groups on its surface. For the purposes of this patent specification "essentially free of' is defined as less than 50 mole percent, based on the moles of the catalyst of surface adsorbed Lewis base groups, preferably less than 25% and most preferably less than 10%. Suitable Lewis bases include but are not limited to neutral bases such as ethers, nitriles and the like.

In one embodiment when a support is employed that contains surface hydroxyl groups, a drying or dehydration treatment should be employed. Timing for the dehydration of the support is not critical; i.e., dehydration may occur immediately before use of the support or days before provided once the support is dehydrated, it is protected from moisture and impurities. Thermal treatment to dehydrate the support may be carried out in vacuum or while purging with a dry inert gas such as nitrogen at a temperature of 100°C to 1000°C, and preferably, above 300°C to 900°C, or more preferably 500°C to 850°C. Pressure considerations are not critical. The duration of the thermal treatment can be from about 1 to 24 hours or more.

In another embodiment, chemical dehydration or chemical treatment to dehydrate the support may be accomplished by slurring the inorganic particulate material, such as, for example, silica in an inert low boiling hydrocarbon, such as, for example, hexane. During the chemical dehydration reaction, the support, preferably silica, should be maintained in a moisture and oxygen-free atmosphere. To the silica slurry is then added a low boiling inert hydrocarbon solution of the chemical dehydrating agent. Useful chemical agents are for example, chlorosilanes, such as trimethylchlorosilane and alkyl metal compounds such as dibutylmagnesium, diethylzinc, trimethylaluminum, triethylaluminum, trimethylaluminum and triethylaluminum being particularly preferred. The ratio of millimoles of metal alkyl per gram of support may be between 0.1 to 100, a ratio of 1 to 10 being preferred. The chemical dehydration may be carried out at temperatures of -100°C to 300°C (preferably 0°C to 100°C) and contact times can range from 1 minute to 48 hours. The treated silica is filtered off and washed with a light aliphatic hydrocarbon (pentanes or hexanes) before drying in vacuo or in a dry stream of inert gas. Since even small amounts of alkyl metal can have an adverse effect on catalyst reactivity to comonomers, the support is washed several times with an inert hydrocarbon solvent to remove both excess dehydration agent and its dehydration reaction products.

It is not beyond the scope of this invention that monocyclopentadienyl transition metal compounds of the invention and/or other known transition metal metallocenes can be used to treat the carrier, or used in excess as a scavenger in the catalyst system of the invention.

The organometallic compounds are from those compounds of Group 1, 2, 3 and 4 organometallic alkyls, alkoxides, and halides. The preferred organometallic compounds are lithium alkyls, magnesium alkyls, magnesium alkyl halides, aluminum alkyls, silicon alkyls, silicon alkoxides, silicon aryloxides and silicon alkyl halides. The more preferred organometallic compounds are aluminum alkyls and magnesium alkyls. The most preferred organometallic compounds are aluminum alkyls, for example, triethylaluminum (TEAL), trimethylaluminum (TMAL), tri-isobutylaluminum (TIBAL) and tri-n-hexylaluminum (TNHAL) and the like.

In the preferred embodiment the organometallic compound is an oxy containing organometallic compound. In a more preferred embodiment the organometallic compound can be represented by the following formula:

(R-Al-O)ₙ

which is a cyclic compound and

R(R-Al-O)ₙ AlR₂

which is a linear compound and mixtures thereof including multi-dimensional structures. In the general formula R is a C₁ to C₇ alkyl group such as for example methyl, ethyl, propyl, butyl, pentyl, hexyl, octyl, nonyl and n is an integer from about 1 to 20. The most preferred oxy containing organometallic compounds are alumoxanes, for example methyl alumoxane and/or ethylalumoxane. It is known in the art to make alumoxanes, see for example U.S. Patent Nos. 4,530,914 and 4,952,716 incorporated herein by reference.

The supported ionic transition metal catalyst suitable for use in this invention may be prepared by combining the transition metal component, the ionic activator component and the carrier in suitable solvents or diluents in one or more steps or in any combination thereof.

There are various ways to form the supported ionic catalyst of the invention. Some of which include:

1) The transition metal component can be contacted with the carrier followed by the addition of the ionic activator and a supported organometallic compound. 2) The carrier could be contacted with the ionic activator followed by the addition ofthe transition metal component and a supported organometallic compound. 3) The transition metal component can be contacted with a carrier and an ionic activator and separately, an organometallic compound could be contacted with another carrier. 4) The ionic catalyst can be formed first and then contacted with a carrier and a supported organometallic compound. 5) The transition metal component and ionic activator can be contacted with a carrier then contacted with a carrier and an organometallic compound. 6) The carriers above can be treated chemically, physically with heat, or its surface modified before contacting it with either the transition metal component or the ionic activator or ionic catalyst. 7) The carrier can be contacted with the transition metal component then the ionic activator to fortn a solid catalyst that is sandwiched between an organometallic treated carrier in a preferred embodiment. 8) The carrier can be pretreated with an organometallic compound followed by the addition of the transition metal component and the activator in any order and a separate carrier contacted with another or the same organometallic compound.

Suitable solvents and/or diluents include, but are not necessarily limited to, straight and branched-chain hydrocarbons such as isobutane, butane, pentane, hexane, heptane, octane; cyclic and alicyclic hydrocarbons such as cyclohexane, cycloheptane, methylcyclohexane, methylcycloheptane; and aromatic and alkylsubstituted aromatic compounds such as benzene, toluene, xylene.

It is preferred that the catalyst components be handled in an inert, moisture-free, oxygen-free environment such as argon, nitrogen or helium because of the sensitivity of the catalyst components to moisture and oxygen.

Regardless of the method, the active supported catalyst can be recovered by removal of the solvent to obtain a free-flowing solid or alternatively, the active supported catalyst can be maintained in a slurry state for direct use.

The catalyst system of this invention can be made in various ways. In one embodiment, a monocyclopentadienyl ligand transition metal compound, such as a metallocene as described above and an ionic activator, is contacted optionally with a first carrier to form a first component, and independently, an organometallic compound, such as an alumoxane, is contacted with a second carrier to form a second component. The first and second components can be used in slurry form or dried or any combination thereof.

The first component of the catalyst system of the invention comprises a majority of a carrier and a monocyclopentadienyl bulky ligand transition metal compound and an ionic activator. The transition metal compound is generally in the range of 0.01 to 50 weight percent of the total weight of the first component, preferably, 0.1 to weight percent, more preferably 0.3 to 10 weight percent and most preferably 0.5 to 5 weight percent.

The second component of the catalyst system of the invention comprises a majority of a carrier and a organometallic compound. The organometallic compound is generally in the range of 1 to 75 weight percent of the total weight ofthe second component, preferably, 1 to 50 weight percent, more preferably 1 to 25 weight percent, and most preferably 1 to 15 weight percent.

The carriers of the invention can be the same or different or mixtures thereof. In the preferred embodiment the carrier in both components is the same type, and is preferably silica.

In another embodiment, at least one of the metallocenes of this invention and another metallocene for example of U.S. Patent No. 4,808,561 can be used to form the first component or more than one first component is used and a similar or different organometallic compound can be used on one second component or more than one second component containing one or more organometallics can be used in the invention, or any combination thereof. In still yet another embodiment, the first and second components are further supported together on another carrier, other than the carriers used to support the first and second components, or separately supported on different carriers or even different types of carriers.

In one embodiment of the invention the first component can contain a quantity of an ionic activator such that the mole ratio of the transition metal of the bulky ligand transition metal compound to the metal of the activator is in the range of less than 0.2:1 to 1000:1, preferably, less than 0.5:1 to 500:1, more preferably 0.7:1 to 300:1 and most preferably less than 1:1 to 200:1.

In another embodiment, the mole percent of the metal of the organometallic compound of the second component to the transition metal of the bulky ligand transition metal compound of the first component is in the range of 1000:1 to 50:1, preferably less than 500:1, more preferably 200:1, even more preferably 150:1 and most preferably 50:1 to 100:1.

In a preferred embodiment, the weight ratio of the first component to the second component is in the range of 20:1 to 1:20, preferably 10:1 to 1:10, more preferably 5:1 to 1:5 and most preferably 2:1 to 1:2.

In one embodiment of this invention the support material preferably has a water content in the range of from 3 weight percent to 27 weight percent based on the total weight of the support material and water contained therein, preferably in the range of from 7 weight percent to 15 weight percent, and most preferably in the range of from 9 weight percent to 14 weight percent. The amount of water contained within the support material can be measured by techniques well known in the art. For the purposes of this patent specification and the appended claims the weight percent water is measured by determining the weight loss of the support material which has been heated and held at a temperature of about 1000°C for about 16 hours. This procedure is known as "Loss on Ignition" (LOI) and is measured in weight percent. It is preferred that when the support contains water an organometallic compound capable of forming an activator is used, for example, trimethylaluminum, also preferred is alumoxane, such as methylalumoxane, which when contacted with the water forms a hydrolyzed activator.

In the preparation of the supported ionic catalyst, the component should be combined to provide a catalyst concentration (transition metal and ionic activator) on the carrier of from 0.01 wt % to 20 wt %, preferably 1 wt % to 5 wt %, more preferably 1 wt% to 10 wt% and most preferably 1 wt% to 5 wt%, based upon the total weight of the support.

### Polymer and Products of the Invention

The catalysts useful in the process of this invention, in the absence of a chain transfer agent, can lead to the production of extremely high molecular weight polymers, low melt index, and copolymers having relatively narrow molecular weight distributions. In this regard, it should be noted that homopolymers and copolymers in one embodiment have molecular weights as high as from 2x10⁵ up to 2x10⁶ or higher and molecular weight distributions within the range of 1.5 to 3.5, preferably 1.5 to 3.2 and most preferably 1.5 to 3 can be produced. In addition, if lower or moderate molecular weights are desired, molecular weight can be controlled with the use of a chain transfer agent such as hydrogen.

It is not beyond the scope of this invention that the polymer described in WO 93/08221 published April 29, 1993 can be made with the catalyst system of this invention. These polymers typically have high melt flow ratios and a low molecular weight distribution.

Combinations of two or more supported ionic transition metal catalyst of the invention can be employed in order to obtain broader MWD such as up to 15 or greater. Alternatively, two or more separately supported ionic catalysts useful in this invention can be used to obtain broad MWD polymers and copolymers.

The MI of the polymers produced by the process of the invention are generally in the range 0.1 dg/min to 1000 dg/min, preferably 0.2 dg/min to 300 dg/min, more preferably 0.3 to 200 dg/min and most preferably 0.5 dg/min to 100 dg/min.

In some instances where it is necessary to improve processability and manipulate final end product characteristics the polymers produced by this present invention can be blended or coextruded into single or multilayer films or the like with various other polymers well known in the art, for instance, LLDPE, LDPE, HDPE, PP, PB or EVA. The polymers produced by the process of the invention are useful in such forming operations include, film, sheet, and fiber extrusion and co-extrusion as well as blow molding, injection molding and roto molding. Films include blown or cast films in mono-layer or multilayer constructions formed by coextrusion or by lamination. Such films are useful as shrink film, cling film, stretch film, sealing films, oriented films, snack packaging, heavy duty bags, grocery sacks, baked and frozen food packaging, medical packaging, industrial liners, membranes, etc. in food-contact and non-food contact applications. Fiber forming operations include melt spinning, solution spinning and melt blown fiber operations. Such fibers may be used in woven or non-woven form to make filters, diaper fabrics, medical garments, geotextiles, etc. General extruded articles include medical tubing, wire and cable coatings, geomembranes, and pond liners. Molded articles include single and multi-layered constructions in the form of bottles, tanks, large hollow articles, rigid food containers and toys.

### EXAMPLES

In order to provide a better understanding of the present invention including representative advantages and limitations thereof, the following examples are offered.

Density is measured in accordance with ASTM-D-1238. The ratio of Mw/Mn can be measured directly by gel permeation chromatography techniques.

For the purposes of this patent specification the MWD of a polymer is determined with a Waters Gel Permeation Chromatograph equipped with Ultrastyrogel columns and a refractive index detector. In this development, the operating temperatures of the instrument was set at 145°C, the eluting solvent was trichlorobenzene, and the calibration standards included sixteen polystyrenes of precisely known molecular weight, ranging from a molecular weight of 500 to a molecular weight of 5.2 million, and a polyethylene standard, NBS 1475.

### COMPARATIVE EXAMPLE 1

### Preparation of Silica-Supported {Me₂Si(C₅Me₄)(NC₁₂H₂₃)TiMe₂ + [DMAH][B(pfp)₄]}

0.2 g Dimethylsilylbridged(tetramethylcyclopentadienyl)(dodecylamido) titanium dimethyl [Me₂Si(C₅Me₄)(NC₁₂H₂₃)TiMe₂] was dissolved in 30 cm³ toluene and added to a slurry of 3.1 g sample of Davison 948 silica (that had been dehydrated to 850°C) in 60 cm³ hexanes at 22°C. After stirring for 1 h, 0.333 g N,N-dimethylanilinium tetrakis(pentafluorophenyl) boron, dissolved in 120 cm³ toluene, was added and stirring continued at 22°C for another 18 h. Then the solvent was removed under vacuum to give a free-flowing supported catalyst.

### Polymerization of Olefins

A sample (1 g) of the supported catalyst from above was admitted into a semi-batch gas-phase reactor with a N₂ pressure. A feed of 1-butene in ethylene was then admitted into the reactor at 90°C. The pressure in the reactor was held constant by continuously feeding 5 mol-% 1-butene in ethylene to compensate for any pressure change due to polymerization. After 1 h, the polymer formed was separated from the seed bed material and analyzed for resin molecular properties and the results are shown in Table 1.

### COMPARATIVE EXAMPLE 2

### Preparation of Silica-Supported {Me₂Si(C₅Me₄)(NC₁₂H₂₃)TiMe₂ + [DMAH][B(pfp)₄]}

0.2 g Me₂Si(C₅Me₄)(NC₁₂H₂₃)TiMe₂ mixed with 0.333 g N,N-dimethylanilinium tetrakis(pentafluorophenyl) boron was dissolved in 120 cm³ toluene and stirred for 0.5 h and then added to a slurry of 3.1 g sample of Davison 948 silica (that had been dehydrated to 850°C) in 40 cm³ toluene at 22°C. After 14 h, the solvent was removed under vacuum to give a free-flowing supported catalyst.

### Polymerization of Olefins

A sample (1 g) of the supported catalyst from above was admitted into a semi-batch gas-phase reactor with a N₂ pressure. A feed of 1-butene in ethylene was then admitted into the reactor at 90°C. The pressure in the reactor was held constant by continuously feeding 5 mol-% 1-butene in ethylene to compensate for any pressure change due to polymerization. After 1 h, the polymer formed was separated from the seed bed material and analyzed for resin molecular properties and the results are shown in Table 1.

### COMPARATIVE EXAMPLE 3

### Preparation of Silica-Supported Me₂Si(C₅Me₄)(NC₁₂H₂₃)TiCl₂

0.313 g Me₂Si(C₅Me₄)(NC₁₂H₂₃)TiCl₂ dissolved in 50 cm³ toluene and added to a slurry of 5 g sample of Davison 948 silica (that had been dehydrated to 850°C) in 60 cm³ hexanes at 22°C. After 2 h, the solvent was removed under vacuum to give a free-flowing supported metallocene.

### Preparation of TMA-Treated Silica Support

400 g Davison 948 silica having Loss-On-Ignition (LOI) value of 11.14 wt% was added slowly to 3380 cm³ of 10 wt-% trimethyl aluminum solution in isopentane contained in a 5-liter flask at -75°C. The silica was added at a rate of about 1.1 g/min. After all the silica had been added the slurry was allowed to warm up to 22°C and this was maintained for 1 h. Then the support material was dried to free-flowing powder.

### Polymerization of Olefins

2 g sample of the TMA-treated silica solid described above was combined with 1 g sample of the silica-supported metallocene in a vial and shaken vigorously. A sample (1 g) of the solid mixture was then admitted into a semi-batch gas-phase reactor with a N₂ pressure. A feed of 1-butene in ethylene was then admitted into the reactor at 90°C. The pressure in the reactor was held constant by continuously feeding 5 mol-% 1-butene in ethylene to compensate for any pressure change due to polymerization. After 1 h, the polymer formed was separated from the seed bed material and analyzed for resin molecular properties and the results are shown in Table 1.

### EXAMPLE A OF THE INVENTION

A sample (1 g) of the silica-supported {Me₂Si(C₅Me₄)(NC₁₂H₂₃)TiMe₂ + [DMAH][B(pfp)₄]} described in Example 1 was combined with a sample (1 g) of the TMA-treated silica solid described in Example 2. This mixture was shaken vigorously in a vial and 1.8 g of the resultant solid mixture was used for the polymerization of 5 mol-% 1-butene in ethylene as described in Example 1.

### EXAMPLE B OF THE INVENTION

### Preparation of Silica-Supported {Me₂Si(C₅Me₄)(NC₁₂H₂₃)TiMe₂ + [DMAH][B(pfp)₄] + Methylalumoxane}

0.2 g Me₂Si(C₅Me₄)(NC₁₂H₂₃)TiMe₂ mixed with 0.333 g N,N-dimethylanilinium tetrakis(pentafluorophenyl) boron was dissolved in 100 cm³ toluene and stirred for 1 h at 25°C.

To a suspension of 2.4 g sample of Davison 948 silica (that had been dehydrated to 600°C) in 60 cm³ hexanes, at 22°C, was added 8.5 cm³ solution of 10 wt-% methylalumoxane in toluene; this was stirred for 1 h.

The solution of the Me₂Si(C₅Me₄)(NC₁₂H₂₃)TiMe₂ and the [DMAH][B(pfp)₄] was then added to the suspension of the MAO-treated silica at 25°C and stirred for 12 h. The solvent was removed under vacuum to give a free-flowing catalyst powder.

0.2 g sample of the TMA-treated silica described in example 3 above was added into a catalyst holding tube as a bottom layer of treated silica, to this was added 1 g of the free-flowing catalyst powder described above, then a second layer of 0.2 g of the TMA-treated silica was added as a top layer such that the layer of the free-flowing catalyst powder was sandwiched between two layers of the TMA-treated silica. This catalyst holding tube was, meanwhile, clamped in place such that no shaking took place. This catalyst setup was then admitted into a semi-batch gas-phase reactor with a N₂ pressure. A feed of 1-butene in ethylene was then admitted into the reactor at 90°C. The pressure in the reactor was held constant by continuously feeding 5 mol-% 1-butene in ethylene to compensate for any pressure change due to polymerization. After 1 h, the polymer formed was separated from the seed bed material and analyzed for resin molecular properties and the results are shown in Table 1.

**Table 1**

| **Example** | **C**_{**2**}^{**=**}**/C**_{**4**}^{**=**} **partial pressure (psi)** | **Polymer Yield (g)** | **Resin Density (g/cc)** | **M**_{**w**} | **M**_{**w**}**/M**_{**n**} |
|---|---|---|---|---|---|
| C1 | 184 | 0.9 | - | 110410 | 3.77 |
| C2 | 175 | 3.8 | - | 167770 | 3.85 |
| C3 | 179 | 13 | 0.9670 | 425470 | 4.64 |
| A | 221 | 44 | 0.9303 | 409860 | 6.06 |
| B | 172 | 147 | 0.9017 | 530970^{a} | 3.03 |

| | | | | | |
|---|---|---|---|---|---|
| a) As a result of the poor solubility of the polymer in the solvent used for the GPC analysis, this value is believed to be only a fraction of the polymer Mw. | | | | | |

While the present invention has been described and illustrated by reference to particular embodiment thereof, it will be appreciated by those of ordinary skill in the art that the invention lends itself to variations not necessarily illustrated herein. In addition the catalyst used in this invention can be combined with one or more other metallocene catalyst well known in the art and/or with traditional Zielger-Natta catalysts. Further, the supported ionic catalyst utilized in this invention can be used with other activators or cocatalysts such as alumoxane. Also, two or more reactors in series may be used with any combination of catalysts with the ionic catalyst system used in this invention. For these reason, then, reference should be made solely to the appended claims for the purposes of determining the true scope of the present invention.

## Claims

1. A catalyst system comprising:
(i) a first component comprising supported on a carrier
(a) a monocyclopentadienyl transition metal bulky ligand compound; and
(b) an ionic activator; and
(ii) a second component comprising
(a) a further carrier; and
(b) an organometallic compound supported on that further carrier.

2. The catalyst system, according to claim 1, wherein the transition metal is selected from Group 4, 5 or 6 transition metals or a mixture thereof.

3. The catalyst system, according to claim 1 or claim 2, wherein the transition metal is selected from titanium, zirconium and hafnium or mixtures thereof.

4. The catalyst system, according to any preceding claim, wherein carriers for the first and second component are the same or different.

5. The catalyst system, according to any preceding claim wherein the carrier of the first component is essentially free of surface absorbed groups which act as a Lewis base.

6. The catalyst system, according to any preceding claim, wherein the monocyclopentadienyl ligand transition metal compound is represented by the general formula: 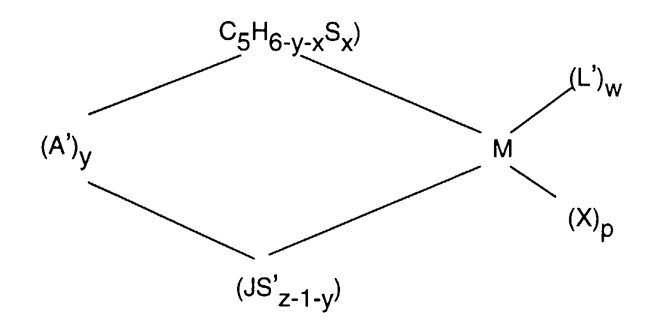 wnerein:
A' is a bridging group;
(C₅H_{5-y-x}Sₓ) is a Cp ring substituted with from zero to five S radicals, each substituent group S being, independently, a radical group which is a hydrocarbyl, substituted-hydrocarbyl, halocarbyl, substituted-halocarbyl, hydrocarbyl-substituted organometalloid, halocarbyl-substituted organometalloid, hydrocarbyl-substituted boron, hydrocarbyl-substituted pnictogen, hydrocarbyl-substituted chalcogen or halogen or two adjacent S groups are joined forming a C₄ to C₂₀ ring to give a saturated or unsaturated polycyclic Cp ligand;
x is from 0 to 5 denoting the degree of substitution;
M is Group 4 transition metal;
L' is a neutral Lewis base;
X is, independently, a hydride radical, hydrocarbyl radical, substituted-hydrocarbyl radical, halocarbyl radical, substituted halocarbyl radical, and hydrocarbyl- and halocarbyl-substituted organometalloid radical or X may optionally be covalently bonded to M and L' or all and any M, S, and S'; or, if p is 2, two X may be joined and bound to the metal atom to form a metallocyclic ring containing from 3 to 20 carbon atoms provided that X is not a substituted or unsubstituted Cp ring as previously defined;
(JS'_{z-1-y}) is a heteroatom ligand in which J is an element from Group 15 of the Periodic Table of Elements with a coordination number of 3 or an element from Group 16 with a coordination number of 2; S' is a radical group which is a hydrocarbyl, substituted hydrocarbyl, halocarbyl, substituted halocarbyl, hydrocarbyl-substituted organometalloid, or halocarbyl-substituted organometalloid; z is the coordination number of the element J;
y is 0 or 1, preferably y=1;
w is an integer from 0 to 1; and
p is an integer from 1 to 2.

7. The catalyst system according to any preceding claim wherein said ionic activator is a boron-ammonium salt compound

8. The catalyst system of any preceding claim wherein the transition metal compound and the ionic activator form a catalyst represented by the following formula: 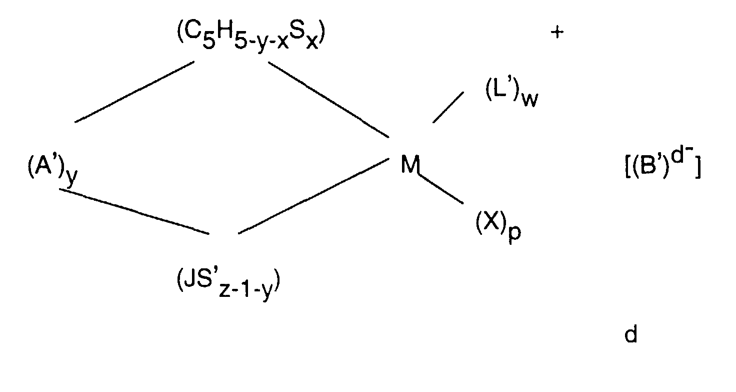 wherein:
A' is a bridging group;
(C₅H_{5-y-x}Sₓ) is a Cp ring substituted with from zero to five S radicals, each substituent group S being, independently, a radical group which is a hydrocarbyl, substituted-hydrocarbyl, halocarbyl, substituted-halocarbyl, hydrocarbyl-substituted organometalloid, halocarbyl-substituted organometalloid, hydrocarbyl-substituted boron, hydrocarbyl-substituted pnictogen, hydrocarbyl-substituted chalcogen or halogen or two adjacent S groups are joined forming a C₄ to C₂₀ ring to give a saturated or unsaturated polycyclic Cp ligand;
x is from 0 to 5 denoting the degree of substitution;
M is Group 4 transition metal;
L' is a neutral Lewis base;
X is a hydride radical, hydrocarbyl radical, substituted-hydrocarbyl radical, hydrocarbyl-substituted organometalloid radical or halocarbyl-substituted organometalloid radical, which radical may optionally be covalently bonded to both or either M and L' or all and any M, S, and S' and X is not a Cp ring as defined above;
(JS'_{z-1-y}) is a heteroatom ligand in which J is an element from Group 15 of the Periodic Table of Elements with a coordination number of 3 or an element from Group 16 with a coordination number of 2; S' is a radical group which is a hydrocarbyl, substituted hydrocarbyl, halocarbyl, substituted halocarbyl, hydrocarbyl-substituted organometalloid, or halocarbyl-substituted organometalloid; z is the coordination number of the element J;
y is 0 or 1;
w is an integer from 0 to 1;
B' is a chemically stable, non-nucleophilic anionic complex having a molecular diameter about or greater than 4 angstroms; and
d is an integer representing the charge of B'.

9. The catalyst system according to claim 8 wherein B' is represented by the general formula:
[(L'-H)]^{c+}[(M¹)^{m+}Q₁Q₂...Qₙ]^{d-}
wherein:
H is a hydrogen atom;
[L'-H] is a Bronsted acid;
M¹ is a metal or metalloid;
Q₁ to Qₙ are, independently, hydride radicals, bridged or unbridged dialkylamido radicals, alkoxide and aryloxide radicals, substituted-hydrocarbyl radicals, halocarbyl and substituted-halocarbyl radicals and hydrocarbyl- and halocarbyl-substituted organometalloid radicals and any one, but not more than one Q₁ to Qₙ may be a halide radical;
m is an integer representing the formal valence charge of M¹; and
n is the total number of Q ligands.

10. The catalyst system according to claim 8 wherein (C₅H_{5-y-x}Sₓ) is tetramethylcyclopentadienyl, A; is dimethylsilyl; y is 1, (JS'_{z-1-y}) is t-butylamido, M is zirconium, x is methyl, L' is N,N-dimethylaniline, and B' is tetrakis (pentafluorophenyl) borate.

11. The catalyst system according to any of claims 8 to 10 wherein (JS'_{z-1-y}) is NC₁₂H₂₃ and M is titanium.

12. The catalyst system according to any preceding claim wherein the organometallic compound is a compound of Group 1, 2, 3, and 4 or a mixture thereof, preferably aluminum alkyls, magnesium alkyls, magnesium alkyl halides, lithium alkyls, silican alkyls, silicon alkoxides and silicon alkyl halides, most preferably alumoxane.

13. The catalyst system according to any preceding claim wherein the carrier is an inorganic oxide or polymeric compound or mixtures thereof, preferably silica or alumona or a combination.

14. A process for polymerizing olefins alone or in combination with one or more other alpha-olefins in a reactor, said process comprising polymerization in the presence of a catalyst system of any one of the preceding claims.

15. The process according to claim 14 wherein the first and second component (i) (ii) of the catalyst system are introduced into the reactor simultaneously preferably mixed together.

16. A method for preparing a supported catalyst system according to any of the preceding claims, said method comprising the steps of:
a) contacting a first carrier with at least one monocyclopentadienyl bulky ligand transition metal compound of claims 7 and 8 and at least one ionic activator of claims 10, 11, 12 and 13; and separately
b) contacting a second carrier which is the same as or different from said first carrier, with the organometallic compound.

17. The method according to claim 16 wherein the ratio of the transition metal to the ionic activator is in the range of 1:5 to 5:1.

18. The method according to claims 16 and 17 wherein said method further comprises drying component (a) and (b) to a free flowing powder together or preferably separately.

## Patentansprüche

1. Katalysatorsystem, das
(i) eine erste Komponente, die aufgebracht auf einen Träger
(a) eine Monocyclopentadienyl-Übergangsmetallverbindung mit raumerfüllendem Liganden und
(b) einen ionischen Aktivator umfaßt, und
(ii) eine zweite Komponente umfaßt, die
(a) einen weiteren Träger und
(b) eine auf diesem weiteren Träger aufgebrachte organometallische Verbindung umfaßt.

2. Katalysatorsystem nach Anspruch 1, bei dem das Übergangsmetall ausgewählt ist aus Gruppe 4, 5 oder 6-Übergangsmetallen oder Mischungen derselben.

3. Katalysatorsystem nach Anspruch 1 oder Anspruch 2, bei dem das Übergangsmetall ausgewählt ist aus Titan, Zirconium und Hafnium oder Mischungen derselben.

4. Katalysatorsystem nach einem der vorhergehenden Ansprüche, bei dem die Träger für die erste und zweite Komponente gleich oder unterschiedlich sind.

5. Katalysatorsystem nach einem der vorhergehenden Ansprüche, bei dem der Träger der ersten Komponente im wesentlichen frei von an der Oberfläche absorbierten Gruppen ist, die als Lewisbase wirken.

6. Katalysatorsystem nach einem der vorhergehenden Ansprüche, bei dem die Monocyclopentadienylligand-Übergangsmetallverbindung durch die allgemeine Formel 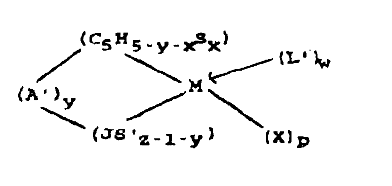 wiedergegeben wird, in der
A' eine Brückengruppe ist,
(C₅H_{5-y-x}Sₓ) ein mit null bis fünf S-Resten substituierter Cp-Ring ist, wobei jede Substituentengruppe S unabhängig eine Restgruppe ist, die Kohlenwasserstoff, substituierter Kohlenwassserstoff, Halogenkohlenwasserstoff, substituierter Halogenkohlenwasserstoff, kohlenwasserstoffsubstituiertes Organometalloid, halogenkohlenwasserstoffsubstituiertes Organometalloid, kohlenwasserstoffsubstituiertes Bor, kohlenwasserstoffsubstituiertes Pnictogen, kohlenwasserstoffsubstituiertes Chalcogen oder Halogen ist oder zwei benachbarte S-Gruppen unter Bildung eines C₄- bis C₂₀-Rings verbunden sind, um einen gesättigten oder ungesättigten polycyclischen Cp-Liganden zu ergeben;
x 0 bis 5 ist und den Substitutionsgrad angibt,
M ein Gruppe 4 Übergangsmetall ist,
L' eine neutrale Lewisbase ist,
X ein Hydridrest, Kohlenwasserstoffrest, substituierter Kohlenwassestoffrest, Halogenkohlenwasserstoffrest, substituierter Halogenkohlenwasserstoffrest, kohlenwasserstoffsubstituierter Organometalloidrest oder halogenkohlenwasserstoffsubstituierter Organometalloidrest ist oder X gegebenenfalls kovalent an beide oder einen von M und L' oder alle und beliebiges M, S und S' gebunden sein kann, oder, falls p 2 ist, zwei X verbunden und an das Metallatom gebunden sein können, um einen metallocyclischen Ring mit 3 bis 20 Kohlenstoffatomen zu bilden, mit der Maßgabe, daß X kein substituierter oder unsubstituierter Cp-Ring wie oben definiert ist,
(JS'_{x-1-y}) ein Heteroatomligand ist, in dem J ein Element aus der Gruppe 15 des Periodensystems der Elemente mit einer Koordinationszahl von 3 oder ein Element aus der Gruppe 16 mit einer Koordinationswahl von 2 ist, S' eine Restgruppe ist, die Kohlenwasserstoff, substituierter Kohlenwasserstoff, Halogenkohlenwasserstoff, substituierter Halogenkohlenwasserstoff, kohlenwasserstoffsubstituiertes Organometalloid oder halogenkohlenwasserstoffsubstituiertes Organometalloid ist, und z die Koordinationszahl des Elements J ist,
y gleich 0 oder 1 ist, vorzugsweise y=1,
w eine ganze Zahl von 0 bis 1 ist und
p eine ganze Zahl von 1 bis 2 ist.

7. Katalysatorsystem nach einem der vorhergehenden Ansprüche, bei dem der ionische Aktivator eine Bor-Ammoniumsalzverbindung ist.

8. Katalysatorsystem nach einem der vorhergehenden Ansprüche, bei dem die Übergangsmetallverbindung und der ionische Aktivator einen Katalysator bilden, der durch die folgende Formel 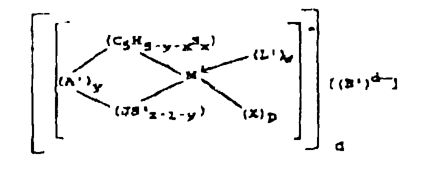 wiedergegeben wird, wobei A' eine Brückengruppe ist,
(C₅H_{5-y-x}5ₓ) ein mit null bis fünf S-Resten substituerter Cp-Ring ist, wobei jede Substituentengruppe S unabhängig eine Restgruppe ist, die Kohlenwasserstoff, substituierter Kohlenwasserstoff, Halogenkohlenwasserstoff, substituierter Halogenkohlenwasserstoff, kohlenwasserstoff-substituiertes Organometalloid, halogenkohlenwasserstoffsubstituiertes Organometalloid, kohlenwasserstoffsubstituiertes Bor, kohlenwasserstoffsubstituiertes Pnictogen, kohlenwasserstoffsubstituiertes Chalcogen oder Halogen ist oder zwei benachbarte S-Gruppen unter Bildung eines C₄- bis C₂₀-Rings verbunden sind, um einen gesättigten oder ungesättigten polycyclischen Cp-Liganden zu ergeben;
x 0 bis 5 ist und den Substitutionsgrad angibt,
M ein Gruppe 4 Übergangsmetall ist,
L' eine neutrale Lewisbase ist,
X ein Hydridrest, Kohlenwasserstoffrest, substituierter Kohlenwasserstoffrest, kohlenwasserstoffsubstituierter Organometalloidrest oder halogenkohlenwasserstoffsubstituierter Organometalloidrest ist, wobei der Rest gegebenenfalls kovalent an beide oder einen von M und L' oder alle und beliebiges M, S und S' gebunden sein kann, und X kein Cp-Ring wie oben definiert ist,
(JS'_{x-1-y}) ein Heteroatomligand ist, in dem J ein Element aus der Gruppe 15 des Periodensystems der Elemente mit einer Koordinationszahl von 3 oder ein Element aus der Gruppe 16 mit einer Koordinationszahl von 2 ist, S' eine Restgruppe ist, die Kohlenwasserstoff, substituierter Kohlenwasserstoff, Halogenkohlenwasserstoff, substituierter Halogenkohlenwasserstoff, kohlenwasserstoffsubstituiertes Organometalloid oder halogenkohlenwasserstoffsubstituiertes Organometalloid ist, und z die koordinationszahl des Elemente J ist,
y gleich 0 oder 1 ist,
w eine ganze Zahl von 0 bis 1 ist,
B' ein chemisch stabiler, nicht nukleophiler, anionischer Komplex mit einem Moleküldurchmesser von etwa oder mehr als 4 Å ist und
d eine ganze Zahl ist, die die Ladung von B' bedeutet.

9. Katalysator nach Anspruch 8, bei dem B' durch die allgemeine Formel
[(L'-H)^{c+}[(M¹)^{m+}Q₁Q₂... Qₙ]^{d-}
wiedergegeben wird, wobei
H ein Wasserstoffatom ist,
[L'-H] eine Brönstedtsäure ist,
M¹ ein Metall oder Metalloid ist,
Q₁ bis Qₙ unabhängig Hydridreste, verbrückte oder unverbrückte Dialkylamidoreste, Alkoxid- und Aryloxidreste, substituierte Kohlenwasserstoffreste, Halogenkohlenwasserstoff- und substituierte Halogenkohlenwasserstoffreste und kohlanwasserstoff- und halogenkohlenwasserstoffsubstituierte Organometalloidreste sind und ein beliebiger, aber nicht mehr als einer von Q₁ bis Qₙ ein Halogenidrest sein kann,
m eine ganze Zahl ist, die die formale Valenzladung von M¹ wiedergibt, und
n die Gesamtzahl der Q-Liganden ist.

10. Katalysatorsystem nach Anspruch 8, bei dem (C₅H_{5-y-x}Sₓ) Tetramethylcyclopentadienyl ist, A Dimethylsilyl ist, y 1 ist, (JS'_{x-1-y}) tert.-Butylamido ist, M Zirconium ist, x Methyl ist, L' Dimethylanilin ist und B' Tetrakis(pentafluorophenyl)borat ist.

11. Katalysatorsystem nach einem der Ansprüche 8 bis 10, bei dem (JS'_{x-1-y}) NC₁₂H₂₃ und M Titan ist.

12. Katalysatorsystem nach einem der vorhergehenden Ansprüche, bei dem die organometallische Verbindung eine Verbindung der Gruppe 1, 2, 3 und 4 oder eine Mischung derselben, vorzugsweise Aluminiumalkylverbindungen, Magnesiumalkylverbindungen, Magnesiumalkylhalogenide, Lithiumalkylverbindungen, Siliciumalkylverbindungen, Siliciumalkoxide und Siliciumalkylhalogenide und am meisten bevorzugt Alumoxan ist.

13. Katalysatorsystem nach einem der vorhergehenden Ansprüche, bei dem der Träger ein anorganisches Oxid oder eine polymere Verbindung oder Mischungen derselben, vorzugsweise Siliciumdioxid oder Aluminiumoxid oder eine Kombination ist.

14. Verfahren zum Polymerisieren von Olefinen allein oder in Kombination mit einem oder mehreren anderen α-Olefinen in einem Reaktor, wobei das Verfahren die Polymerisation in Gegenwart eines Katalysatorsystems gemäß einem der vorhergehenden Ansprüche umfaßt.

15. Verfahren nach Anspruch 14, bei dem die erste und zweite Komponente (i) (ii) des Katalysatorsystems gleichzeitig in den Reaktor eingebracht werden, vorzugsweise miteinander vermischt.

16. Verfahren zur Herstellung eines Trägerkatalysatorsystems gemäß einem der vorhergehenden Ansprüche, bei dem
a) ein erster Träger mit mindestens einer Monocyclopentadienyl-Übergangsmetallverbindung mit raumerfüllendem Liganden der Ansprüche 7 und 8 und mindestens einem ionischen Aktivator der Ansprüche 10, 11, 12 und 13 kontaktiert wird, und getrennt davon
b) ein zweiter Träger, der der gleiche wie der erste Träger oder von diesem verschieden ist, mit der organometallischen Verbindung kontaktiert wird.

17. Verfahren nach Anspruch 16, bei dem das Verhältnis von Übergangsmetall zu dem ionischen Aktivator im Bereich von 1:5 bis 5:1 liegt.

18. Verfahren nach Anspruch 16 oder 17, bei dem in dem Verfahren ferner Komponenten (a) und (b) zusammen oder vorzugsweise getrennt zu einem rieselfähigen Pulver getrocknet werden.

## Revendications

1. Formulation de catalyseur comprenant :
(i) un premier constituant comprenant, à l'état fixé sur un support
(a) un composé monocyclopentadiénylique de métal de transition servant de ligand volumineux ; et
(h) un activateur ionique ; et
(ii) un second constituant comprenant
(a) un support supplémentaire ; et
(b) un composé organométallique porté par ce support supplémentaire.

2. Formulation de catalyseur suivant la revendication 1, dans laquelle le métal de transition est choisi parmi les métaux de transition des Groupes 4, 5 et 6 ainsi que leurs mélanges.

3. Formulation de catalyseur suivant la revendication 1 ou la revendication 2, dans laquelle le métal de transition est choisi entre le titane, le zirconium, l'hafnium et leurs mélanges.

4. Formulation de catalyseur suivant l'une quelconque des revendications précédentes, dans laquelle les supports pour les premier et second constituants sont identiques ou différents.

5. Formulation de catalyseur suivant l'une quelconque des revendications précédentes, dans laquelle le support du premier constituant est pratiquement dépourvu de groupes absorbés en surface qui jouent le rôle de base de Lewis.

6. Formulation de catalyseur suivant l'une quelconque des revendications précédentes, dans laquelle le composé monocyclopentadiényle de métal de transition servant de ligand est représenté par la formule générale : 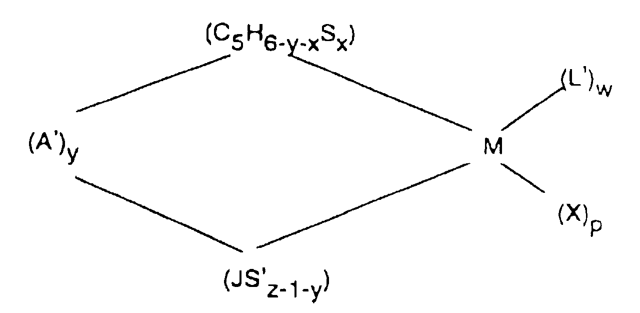 dans laquelle :
A' représente un groupe de pontage ;
(C₅H_{5-y-x}Sₓ) représente un noyau Cp substitué avec zéro à cinq radicaux S, chaque groupe S servant de substituant représentant, indépendamment, un radical qui consiste en un radical hydrocarbyle, hydrocarbyle substitué, halogénocarbyle, halogénocarbyle substitué, organométalloïde à substituants hydrocarbyle, organométalloïde à substituant halogénocarbyle, bore à substituant hydrocarbyle, pnictogène à substituant hydrocarbyle, chalcogène à substituant hydrocarbyle ou halogène ou bien deux groupes adjacents sont joints en formant un noyau en C₄ à C₂₀, ce qui donne un ligand Cp polycyclique saturé ou insaturé ;
x a une valeur de 0 à 5 et désigne le degré de substitution ;
M représente un métal de transition du Groupe 4 ;
L' représente une base de Lewis neutre ;
X représente un radical hydrure, un radical hydrocarbyle, un radical hydrocarbyle substitué, un radical halogénocarbyle, un radical halogénocarbyle substitué, un radical organométalloïde à substituant hydrocarbyle ou un radical organométalloïde à substituant halogénocarbyle, ou bien X peut être facultativement lié par covalence à la fois ou soit à M et L' soit la totalité et n'importe lesquels de M, S et S' ; ou bien, si p est égal à z, deux groupes X peuvent être joints et liés à l'atome métallique pour former un noyau métallocyclique contenant 3 à 20 atomes de carbone, sous réserve que X ne représente pas un noyau Cp substitué répondant à la définition précitée ;
(JS'_{z-1-y}) représente un ligand hétéroatomique dans lequel J représente un élément du Groupe 15 du Tableau Périodique des Eléments ayant un indice de coordination égal à 3 ou un élément du Groupe 16 ayant un indice de coordination égal à 2 ; S' représente un radical qui consiste en un groupe hydrocarbyle, hydrocarbyle substitué, halogénocarbyle, halogénocarbyle substitué, organométalloïde à substituant hydrocarbyle ou organométalloïde à substituant halogénocarbyle ; z représente l'indice de coordination de l'élément J ;
y est égal à 0 ou 1, y étant de préférence égal à 1 ;
w représente le nombre entier 0 ou 1 ; et
p représente le nombre entier 1 ou 2.

7. Formulation de catalyseur suivant l'une quelconque des revendications précédentes, dans laquelle l'activateur ionique est un sel de bore-ammonium.

8. Formulation de catalyseur suivant l'une quelconque des revendications précédentes, dans laquelle le composé de métal de transition et l'activateur ionique forment un catalyseur représenté par la formule suivante : 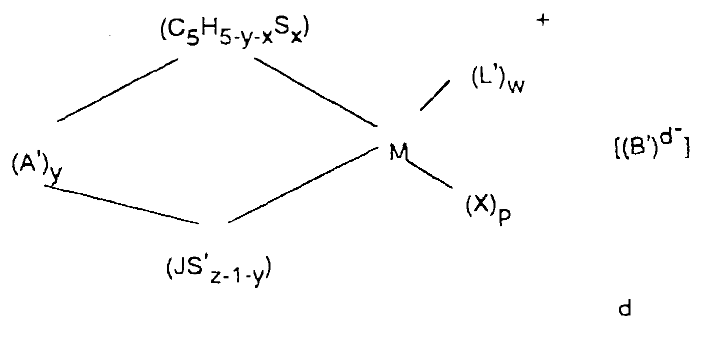 dans laquelle :
A' représente un groupe de pontage ;
(C₅H_{5-y-x}Sₓ) représente un noyau Cp substitué avec zéro à cinq radicaux S, chaque substituant S représentant, indépendamment, un radical qui consiste en un groupe hydrocarbyle, hydrocarbyle substitué, halogénocarbyle, halogénocarbyle substitué, organométalloïde à substituant hydrocarbyle, organométalloïde à substituant halogénocarbyle, bore à substituant hydrocarbyle, pnictogène à substituant hydrocarbyle, chalcogène à substituant hydrocarbyle ou halogène, ou bien deux groupes S adjacents sont joints en formant un noyau en C₄ à C₂₀ donnant un ligand Cp polycyclique saturé ou insaturé ;
x a une valeur de 0 à 5 et désigne le degré de substitution ;
M représente un métal de transition du Groupe 4 ;
L' représente une base de Lewis neutre ;
X représente un radical hydrure, un radical hydrocarbyle, un radical hydrocarbyle substitué, un radical organométalloïde à substituant hydrocarbyle ou un radical organométalloïde à substituant halogénocarbyle, radical qui peut être facultativement lié par covalence à la fois à ou soit à M et L' soit à la totalité et n'importe lesquels de M, S et S', et X₁ ne représente pas un noyau Cp répondant à la définition précitée ;
(JS'_{z-1-y}) représente un ligand hétéroatomique dans lequel J représente un élément du Groupe 15 du Tableau Périodique des Eléments ayant un indice de coordination égal à 3 ou un élément du Groupe 16 ayant un indice de coordination égal à 2 ; S' représente un radical qui consiste en un groupe hydrocarbyle, hydrocarbyle substitué, halogénocarbyle, halogénocarbyle substitué, organométalloïde à substituant hydrocarbyle ou organométalloïde à substituant halogénocarbyle ; z représente l'indice de coordination de l'élément J ;
y est égal à 0 ou 1 ;
w représente le nombre entier à 0 ou 1 ;
B' représente un complexe anionique non nucléophile, chimiquement stable, ayant un diamètre moléculaire égal ou supérieur à environ 4 angströms ; et
d est un nombre entier représentant la charge de B'.

9. Formulation de catalyseur suivant la revendication 8, dans laquelle B' est représenté par la formule générale :
[(L'-H)]^{c+}[(M¹)^{m+}Q₁Q₂...Qₙ]^{d-}
dans laquelle :
H représente un atome d'hydrogène ;
[L'-H] représente un acide de Brönsted ;
M' représente un métal ou un métalloïde ;
Q₁ à Qₙ représentent, indépendamment, des radicaux hydrure, des radicaux dialkylamido pontés ou non pontés, des radicaux alkoxyde et aryloxydes, des radicaux hydrocarbyle substitués, des radicaux halogénocarbyle et halogénocarbyle substitués et des radicaux organométalloïde à substituants hydrocarbyle et halogénocarbyle, l'un quelconque, mais pas plus d'un, des radicaux Q₁ à Qₙ pouvant représenter un radical halogéno ;
m est un nombre entier représentant la charge de valence formelle de M ; et
n représente le nombre total de ligands Q.

10. Formulation de catalyseur suivant la revendication 8, dans laquelle (C₅H_{5-y-x}Sₓ) représente un groupe tétraméthylcyclopentadiényle ; A représente un groupe diméthylsilyle ; y est égal à 1 ; (JS'_{z-1-y}) représente un groupe tertio-butylamido,
M représente le zirconium, X représente un groupe méthyle, L' représente la N,N-diméthylaniline, et B' représente le borate de tétrakis(pentafluorophényle).

11. Formulation de catalyseur suivant l'une quelconque des revendications 8 à 10, dans lequel (JS'_{z-1-y}) représente un groupe C₁₂H₂₃ et M représente le titane.

12. Formulation de catalyseur suivant l'une quelconque des revendications précédentes, dans laquelle le composé organométallique est un composé des Groupes 1, 2, 3 et 4 ou un mélange de tels composés, de préférence des alkylaluminiums, des alkylmagnésiums, des halogénures d'alkylmagnésium, des alkyllithiums, des alkylsiliciums, des alcoolates de silicium et des halogénures d'alkylsilicium, notamment l'alumoxane.

13. Formulation de catalyseur suivant l'une quelconque des revendications précédentes, dans laquelle le support consiste en un oxyde inorganique ou composé polymérique ou un de leurs mélanges, de préférence silice, alumine ou une de leurs associations.

14. Procédé pour la polymérisation d'oléfines seules ou en association avec une ou plusieurs autres alpha-oléfines dans un réacteur, ledit procédé comprenant la polymérisation, en présence d'une formulation de catalyseur suivant l'une quelconque des revendications précédentes.

15. Procédé suivant la revendication 14, dans lequel les premier et second constituants (i) et (ii) de la formulation de catalyseur sont introduits dans le réacteur simultanément, de préférence en mélange.

16. Procédé pour la préparation d'une formulation de catalyseur sur un support suivant l'une quelconque des revendications précédentes, ledit procédé comprenant les étapes consistant :
a) à mettre en contact un premier support avec au moins un composé de métal de transition à ligand volumineux monocyclopentadiényle suivant les revendications 7 et 8 et au moins un activateur ionique suivant les revendications 10, 11, 12 et 13 ; et, séparément,
b) à mettre en contact un second support, qui est identique audit, ou différent dudit, premier support, avec le composé organométallique.

17. Procédé suivant la revendication 16, dans lequel le rapport du métal de transition à l'activateur ionique est compris dans l'intervalle de 1:5 à 5:1.

18. Procédé suivant les revendications 16 et 17, qui comprend en outre la déshydratation des constituants (a) et (b) sous forme d'une poudre à écoulement libre, conjointement ou de préférence séparément.
